# EUROPEAN PATENT APPLICATION

(11) **EP 3 553 303 A1**
(43) Date of publication of application: **16.10.2019**
(21) Application number: 19164268.5
(22) Date of filing: 21.03.2019
(51) Int. Cl.: F02K 3/06, F02C 7/36, F02K 3/072

(54) **GAS TURBINE ENGINE AND TURBINE ARRANGEMENT**

(30) Priority: 09.04.2018 GB 201805854
(71) Applicant: Rolls-Royce plc, London SW1E 6AT (GB)
(72) Inventor: Townes, Roderick, Derby, Derbyshire DE24 8BJ (GB); Sadler, Keith, Derby, Derbyshire DE24 8BJ (GB)
(74) Representative: Rolls-Royce plc

(57) **Abstract**

A turbine arrangement for gas turbine engine (10), the arrangement comprising a high pressure turbine (17) mounted on a high pressure shaft (27) and a low pressure turbine (19) mounted on a low pressure shaft (26), wherein the high pressure turbine (17) comprises a single stage turbine rotor configured to rotate in a first direction, and wherein the low pressure turbine (19) comprises three or more rotors (19a, b, c) configured to rotate in a second direction opposite to the first direction. The low pressure turbine (19) is closely coupled to the high pressure turbine (17) with no stator vanes provided between the two.

## Description

The present disclosure relates to a gas turbine engine and a turbine arrangement for a gas turbine engine.

A known ducted fan gas turbine engine comprises, in axial flow series, an air intake, a propulsion fan (which may also be referred to as a low pressure compressor) having fan blades, and which is driven by an engine core which includes one or more further compressors which feed air to combustion equipment, two or more turbines driven by the combustion products and which drive the compressors and propulsion fan via one or more core shafts, and a core exhaust nozzle. The engine also has a bypass duct and a bypass exhaust nozzle through which air is driven by the propulsion fan.

The turbines may each have multiple rotor stages. The gas flow between the turbines, and between the rotor stages within the turbines, may be conditioned by guide vanes which form stators and improve the efficiency of the downstream rotors by changing the angle of incidence of the gas flow onto the downstream rotor.

The turbines, particularly the higher pressure turbines may require cooling to ameliorate the effects of high temperature combustion gases.

According to a first aspect there is provided a turbine arrangement for gas turbine engine, the arrangement comprising a high pressure turbine mounted on a high pressure shaft and a low pressure turbine mounted on a low pressure shaft, wherein the high pressure turbine comprises a single stage turbine rotor configured to rotate in a first direction, and wherein the low pressure turbine comprises three or more rotors configured to rotate in a second direction opposite to the first direction.

A second aspect provides a geared turbine engine comprising a power gearbox, a high pressure turbine mounted on a high pressure shaft and a low pressure turbine mounted on a low pressure shaft, wherein the high pressure turbine comprises a single stage turbine rotor configured to rotate in a first direction, and the low pressure turbine is configured to rotate in a second direction opposite to the first direction. The low pressure shaft may be arranged to input power to the power gearbox and the power gearbox may drive the propulsion fan (low pressure compressor fan) of the engine.

The low pressure turbine may be separated from the high pressure turbine by a statorless gas flow path, that is to say by a path that does not include stator guide vanes. Thus a space extends between the low pressure turbine and the high pressure turbine, the space being statorless. The most upstream of the stator vanes which are downstream of the high pressure turbine, may be positioned downstream of the first stage of the low pressure turbine.

The statorless gas flow path between the high and low pressure turbines may permit a reduction in the axial length of the engine, and thus an overall reduction in size, and may reduce the complexity and parts count of the engine.

Where a single stage high pressure turbine is used, the cooling requirements for the engine may be reduced, which may improve the specific fuel consumption. Further, the reduction in cost achieved by reduction of the number of high pressure turbine stages may more than offset any increased cost associated with any necessary increase in the number or configuration of lower pressure turbine stages.

The low pressure turbine may have first, second and third rotor stages and the first rotor stage may be positioned upstream of the second and third rotor stages, the first rotor stage being mounted to the low pressure shaft by a first drive arm. The low pressure turbine may have more stages, for example fourth and fifth stages.

The first drive arm may circumferentially surround a downstream end of the high pressure shaft. For example, the first drive arm may define an annular space into which projects the rear end of the high pressure shaft. A bearing may be provided between the rear end of the high pressure shaft and the first drive arm.

The downstream stages of the low pressure turbine (e.g. the second, third, and, if provided, further, rotor stages) may be mounted to the low pressure shaft by one or more further drive arms independent of the first drive arm. Alternatively the first and second stages may be mounted to a first drive arm and the third and any subsequent stages to a second drive arm.

The low pressure shaft may be carried by a single bearing. In one example the single bearing may be positioned along the engine axis at or near, e.g. adjacent, the rearward one of the rotor stages of the low pressure turbine. In another example the single bearing may be positioned along the engine axis at or near, e.g. adjacent, the second rotor stage of the low pressure turbine. In another example the bearing can be between any of the stages of the low pressure turbine.

In another example the low pressure shaft may be carried by two bearings comprising an upstream bearing and a downstream bearing. The upstream bearing may be axially adjacent, e.g. just downstream of, the second stage of the low pressure turbine. The downstream bearing may be axially adjacent, e.g. just upstream of the third and any subsequent stages.

The low pressure shaft may be made shorter by one or more of the arrangements above, thus improving stiffness and improving the rotor dynamics.

The low pressure turbine may comprise three, four or five rotor stages.

The high pressure turbine may be configured to have an exit flow angle in the range from 20 to 50 degrees, or from 30-40 degrees.

The arrangements above may be used in a large turbofan engine, for example one adapted to produce a maximum net thrust as herein defined of at least any of the following: 160kN, 170kN, 180kN, 190kN, 200kN, 250kN, 300kN, 350kN, 400kN, 450kN, 500kN, or 550kN.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. These may constitute a low pressure compressor, low pressure shaft and low pressure turbine respectively. The engine core may further comprise a second turbine, a second compressor, and a second core shaft connecting the second turbine to the second compressor. These may constitute a high pressure compressor, high pressure shaft and high pressure turbine respectively. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The high pressure compressor may be a nine stage compressor giving a compression ratio of between 10 and 15 to 1, or between 12 or 13 to 1. The intermediate compressor may be a four stage compressor giving a compression ration of between 2 and 3 to 1

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be defined as the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of a gas turbine engine with a different turbine arrangement;
Figure 5 is a schematic close up sectional view of the turbine arrangement in the core of the gas turbine engine of Figure 4;
Figure 6 is a schematic close up sectional view of another turbine arrangement for a gas turbine engine core;
Figure 7 is a schematic close up sectional view of another turbine arrangement for a gas turbine engine core;
Figure 8 is a schematic close up sectional view of another turbine arrangement for a gas turbine engine core; and
Figure 9 is a schematic cross-sectional view of a non-geared gas turbine engine.

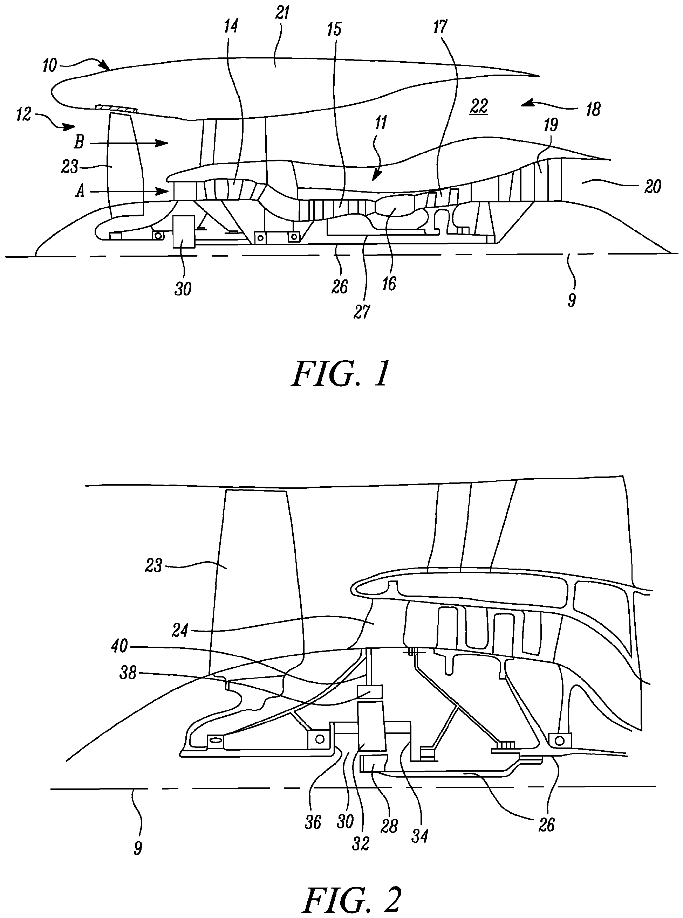

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to the input shaft, e.g. to a sun wheel, or sun gear, 28, of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

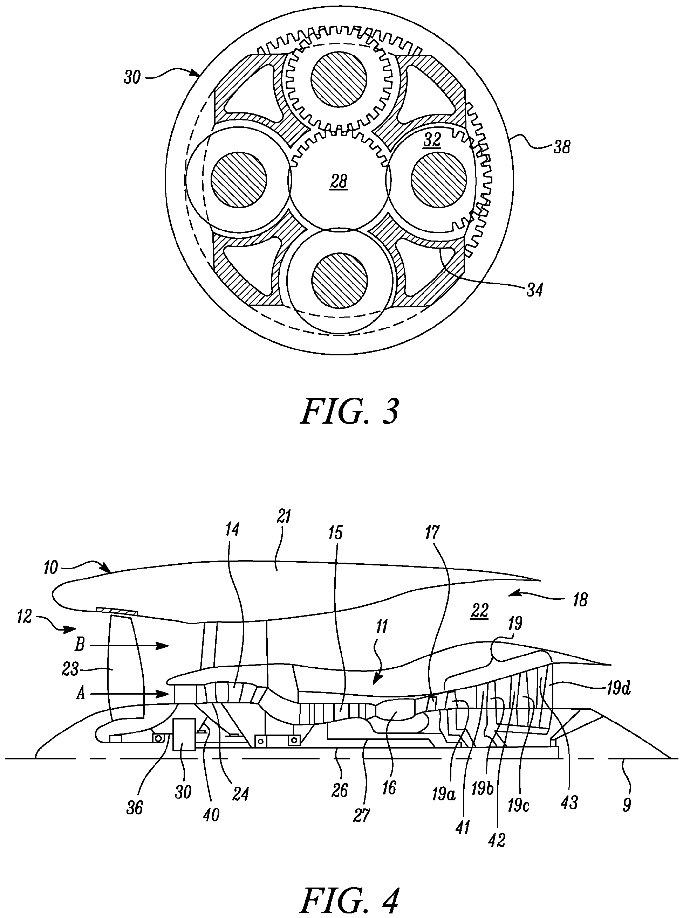

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular. The intake end of the engine may be referred to as the front and the exhaust end as the rear with the terms forward and backward being defined as being relatively towards the front and rear respectively. The general flow through the engine is from front to rear, left to right in the side views in the Figures, this general flow defining upstream and downstream directions.

Figure 4 illustrates a gas turbine engine of similar general form to that illustrated in Figure 1, i.e. with a propulsive fan 23 driven by a gearbox 30 powered by the low pressure shaft 26. Figure 4 differs from Figure 1 in the arrangement of the high pressure and low pressure turbines 17 and 19. In particular, and as schematically illustrated in Figure 4, the high pressure turbine 17 is a single stage high pressure turbine, and the low pressure turbine 19 is a four stage turbine which is close-coupled to the high pressure turbine 17. The high pressure turbine blades have a high relative exit angle. The angle of flow exiting the high pressure turbine blades may be in the range 20-50 degrees, or 30-40 degrees. The high pressure turbine blades are therefore of a high work type design, doing almost as much expansion in a single stage as a conventional two stage high pressure turbine.

The low pressure turbine is arranged to be contra-rotating relative to the high pressure turbine (by suitably by angling the turbine blades in the opposite orientation compared to the high pressure turbine 17) and thus no stator vanes are provided between the high pressure turbine 17 and first stage of the low pressure turbine 19, allowing for the close coupling between the two. The high pressure turbine 17 and low pressure turbine 19 thus form a contra-rotating statorless arrangement. The transition or space 59 between the high pressure turbine 17 and low pressure turbine 19 maybe termed statorless as there are no stator vanes between the two turbines. Thus of the stator vanes downstream of, i.e. following, the high pressure turbine 17, the most upstream of them 41 is downstream of the first stage of the low pressure turbine 19.

The low pressure turbine 19 illustrated in Figure 4 has a total of four rotor stages, with the second, third and fourth stages 19b, c and d, each being preceded in the gas flow direction by stator vanes 41, 42, 43.

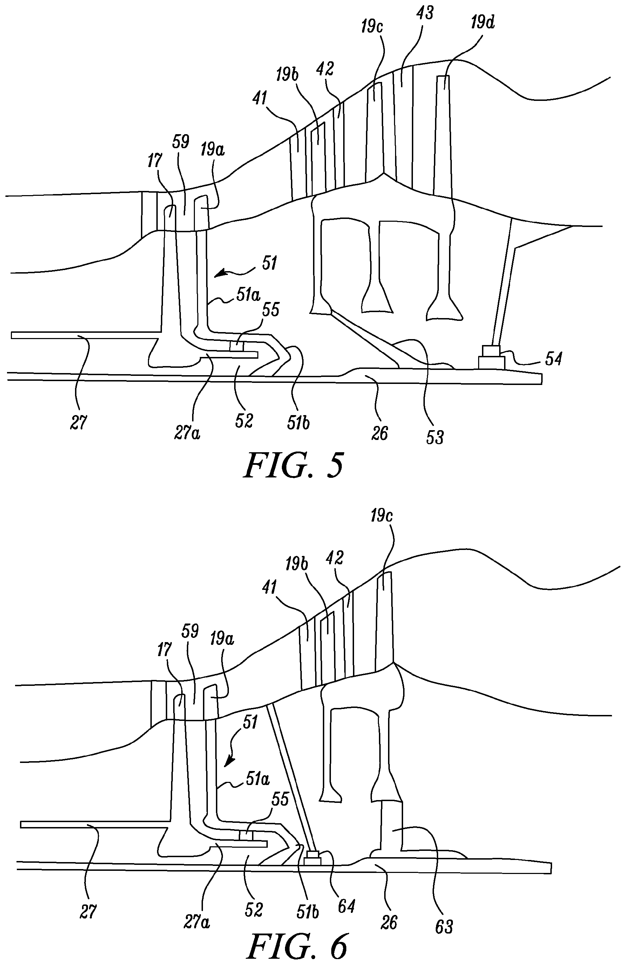

The turbine arrangement of Figure 4 is shown in more detail in the close-up schematic close-up sectional view of Figure 5. As can be seen in Figure 5, the first stage 19a of the low pressure turbine is spaced relatively further forward of the second stage 19b than the spacing between the second, third and fourth stages 19b, c and d. It is spaced closer to the high pressure turbine 17 than it is to the second stage 19b of the low pressure turbine and no stator vanes are positioned between the high pressure turbine 17 and the low pressure turbine 19a.

Figure 5 also illustrates in more detail the bearing arrangement for the low pressure turbine 19. The first stage 19a of the low pressure turbine is mounted on the low pressure shaft 26 by an annular drive arm 51 which has a radially extending section 51a and which is arranged to circumferentially surround the downstream end 27a of the high pressure shaft 27. This is achieved by providing the radially inner part of the drive arm 51 with both axially and radially extending sections 51b. Thus the drive arm 51 together with the low pressure shaft 26 defines an annulus, an annular space 52 which receives the downstream end of the high pressure shaft 27.

A bearing 55 is provided between the rear end 27a of the high pressure shaft and the axially extending part of the drive arm 51 to support and locate the high pressure turbine.

In this embodiment the low pressure turbine 19 has a total of four stages, with the second, third and fourth stages 19b, c and d mounted together to the low pressure shaft 26 by a single drive arm 53. The single drive arm 53 may be connected to any of the second, third and fourth stages of the low pressure turbine. As illustrated in Figure 4 it is connected to the second stage 19b. Thus, in this arrangement the first stage of the low pressure turbine 19 is independently mounted to the low pressure shaft 26 by drive arm 51 while the second and subsequent stages of the low pressure turbine are mounted to the low pressure shaft using second or second and further drive arms 53.

Figure 5 also illustrates that the low pressure shaft 26 is supported by a single bearing 54 rather than two bearings being required at the rear to support a longer low pressure shaft 26. Figure 6 illustrates an alternative arrangement of the turbines. In the arrangement of Figure 6 the low pressure turbine 19 has three stages rather than four. As in Figure 5, the front stage 19a closely coupled to the high pressure turbine 17 and mounted by a drive arm 51 which is independent from the mounting of the remaining low pressure turbine stages and which overhangs, or circumferentially surrounds, the rear end 27a of the high pressure shaft 27. The low pressure turbine 19 thus has only two downstream stages, a second stage 19b and a third stage 19c, each preceded by respective stator vanes 41 and 42. Again the low pressure turbine 19 is contra-rotating compared to the high pressure turbine 17 and there is no stator between the high pressure turbine 17 and the first stage of the low pressure turbine 19a.

Figure 6 also illustrates an alternative mounting arrangement for the second and subsequent stages of the low pressure turbine in which they are mounted together to a single drive arm 63 attached to the rear stage 19c of the low pressure turbine 19.

Figure 6 also illustrates an alternative bearing arrangement in which the bearing 64 for the low pressure shaft 26 is positioned between the drive arms for the first stage 19a of the low pressure turbine and the second and subsequent stages 19b, 19c.

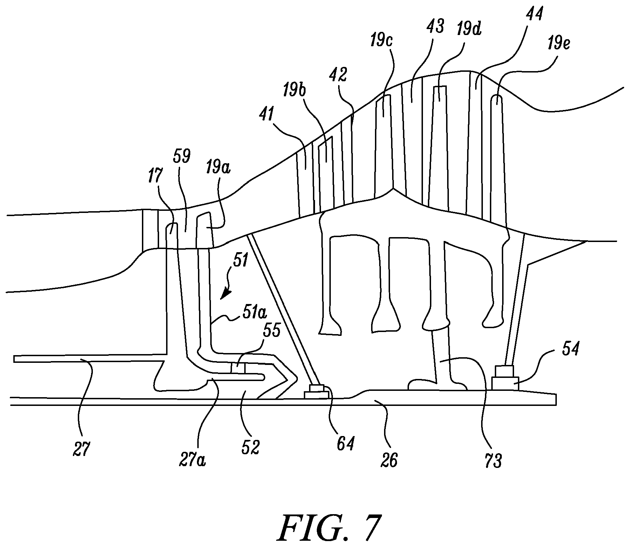

Figure 7 shows further alternative mounting and bearing arrangements for the turbine arrangements. In Figure 7 the front stage 19a of the low pressure turbine 19 is similarly positioned and mounted as the low pressure turbine arrangements of Figures 5 and 6. However, the low pressure turbine 19 in this case has a total of five stages, so there are four downstream stages 19b, c, d and e, each with preceding stator vanes 41, 42, 43 and 44 respectively. Again the low pressure turbine 19 is contra-rotating compared to the high pressure turbine 17 and there is no stator between the high pressure turbine 17 and the first stage of the low pressure turbine 19a.

In the Figure 7 arrangement the low pressure shaft 26 has bearings 64 and 54 at the front and rear of the co-mounted second and subsequent low pressure turbine stages, and the second and subsequent low pressure turbine stages are mounted to the low pressure shaft 26 by a single common drive arm 73. As illustrated in this example the drive arm 73 is attached to the fourth low pressure turbine stage.

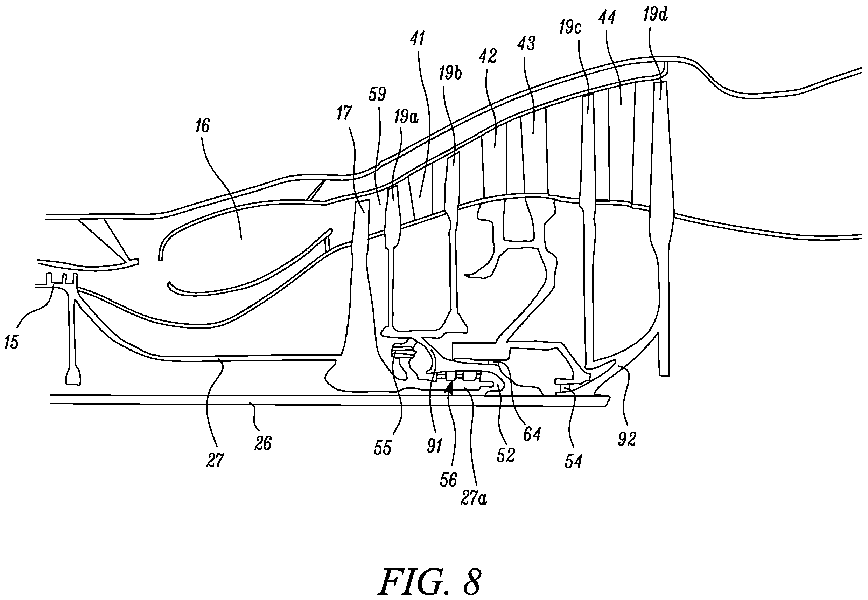

The different bearing arrangements for the low pressure shaft illustrated in Figures 5, 6 and 7 may be used with any of the different mounting arrangements for the second and subsequent low pressure turbine stages and different numbers of stages illustrated in Figures 5, 6 and 7. Furthermore, although each of the Figures 5, 6 and 7 arrangements show the second and subsequent stages co-mounted to the low pressure shaft by a single drive arm, the single drive arm can be attached to any of the second to subsequent stages, or drive arms may be provided to two or more of the second and subsequent stages. Figure 8 shows another embodiment of the turbine arrangement. In Figure 8 the intermediate pressure turbine 19 has four stages 19a, 19b, 19c, 19d with the first two stages 19a and 19b being mounted to a front drive shaft 91 and the third and fourth stages 19c and 19d being mounted to a rear drive shaft 92. The drive shafts 91 and 92 are attached, e.g. by splined connections, to the intermediate pressure shaft 26. As in the embodiments above, the first stage 19a of the intermediate pressure turbine is close-coupled by a statorless transition or space 59 to the single stage high pressure turbine 17. The intermediate pressure turbine 19 is contra-rotating compared to the high pressure turbine 17. As above, the high pressure turbine 17 is coupled by a high pressure drive shaft 27 to the high pressure compressor 15 which is immediately upstream of the combustion equipment 16. In the embodiment of Figure 8, stator vanes 41 to 44 are provided, in this case a first stator vane between the first and second intermediate pressure turbine stages 19a and 19b, two stator vanes 42 and 43 between the second and third stages, and a fourth stator vane 44 between the third and fourth turbine stages 19c and 19d.

In the embodiment of Figure 8, two straddle bearings 55 and 56 are provided between the high pressure shaft 27 and the drive shaft 91 for the intermediate pressure turbine. The high pressure shaft 27 therefore has a rearwardly extending section 27A which is within a space 52 axially inside the intermediate pressure drive shaft 91.

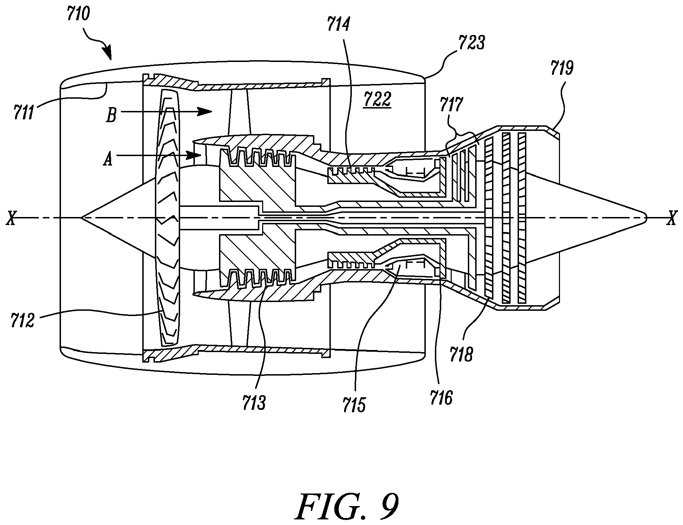

The intermediate pressure shaft 26 is supported at its rear, downstream end, by two bearings 54 and 64.
The turbine arrangements illustrated and discussed above may also be used in a non-geared gas turbine engine. An example of such an engine is illustrated schematically in Figure 9. With reference to Figure 9, a ducted fan gas turbine engine generally indicated at 710 has a principal and rotational axis X-X. The engine 710 comprises, in axial flow series, an air intake 711, a compressive fan 712 (which may also be referred to as a low pressure compressor), an intermediate pressure compressor 713, a high-pressure compressor 714, combustion equipment 715, a high-pressure turbine 716, an intermediate pressure turbine 717, a low-pressure turbine 718 and a core exhaust nozzle 719. The engine also has a bypass duct 722 and a bypass exhaust nozzle 723.

The gas turbine engine 710 works in a conventional manner so that the air entering the intake 711 is accelerated by the fan 712 to produce two air flows; a first air flow A into the intermediate pressure compressor 713 and a second airflow B which passes through the bypass duct 722 to provide propulsive thrust. The intermediate pressure compressor 713 compresses the air flow A directed into it before delivering that air to the high pressure compressor 714 where further compression takes place. The compressed air exhausted from the high-pressure compressor 714 is directed into the combustion equipment 715 where it is mixed with fuel and the mixture combusted. The resulting hot combustion products then expand through, and thereby drive the high, intermediate and low-pressure turbines 716, 717 and 718 before being exhausted through the nozzle 719 to provide additional propulsive thrust. The high, intermediate and low-pressure turbines 716, 717, 718 respectively drive the high and intermediate pressure compressors, 714, 713 and the fan 712 by suitable interconnecting shafts.

As illustrated in Figure 9, the intermediate pressure turbine 717 has three stages, of which the front stage is closely coupled to the high pressure turbine 716, which a single stage turbine, with a statorless transition between the high pressure and intermediate pressure stages. The bearing and mounting arrangements illustrated and discussed above by reference to Figures 5, 6 and 7 for the low pressure turbine in the geared engine would be applied to the intermediate pressure turbine 717 in the case of a non-geared engine of Figure 9 having three turbine stages: high pressure, intermediate pressure and low pressure.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A geared turbine engine (10) comprising a power gearbox (30), a high pressure turbine (17) mounted on a high pressure shaft (27) and a low pressure turbine (19) mounted on a low pressure shaft (26), wherein the high pressure turbine (17) comprises a single stage turbine rotor configured to rotate in a first direction, and the low pressure turbine (19) is configured to rotate in a second direction opposite to the first direction.

2. A geared turbine engine (10) according to claim1 wherein the low pressure shaft (26) is arranged to input power to the power gearbox (30) and the power gearbox drives a propulsion fan (23).

3. A geared turbine engine (10) according to claim 1 or 2 wherein the low pressure turbine (19) is separated from the high pressure turbine (17) by a statorless gas flow path; wherein a space (59) extends between the low pressure turbine (19) and the high pressure turbine (19), the space (59) being statorless.

4. A geared turbine engine (10) according to any one of the preceding claims wherein the low pressure turbine (19) has first, second and third rotor stages (19a, b, c), and wherein the first rotor stage (19a) is positioned upstream of the second and third rotor stages (19b, c), the first rotor stage (19a) being mounted to the low pressure shaft (26) by a first drive arm (51,91).

5. A geared turbine engine (10) according to claim 6 wherein the first drive arm (51, 91) circumferentially surrounds a downstream end (27a) of the high pressure shaft (27).

6. A geared turbine engine (10) according to claim 5, wherein the first drive arm (51, 91) defines an annular space (52) into which projects the rear end (27a) of the high pressure shaft (27).

7. A geared turbine engine (10) according to claim 6, wherein a bearing (55) is provided between the rear end (27a) of the high pressure shaft (27) and the first drive arm (51,91).

8. A geared turbine engine (10) according to claim 4, 5, 6 or 7 wherein the second and third rotor stages (19b, c) of the low pressure turbine (19) are mounted to the low pressure shaft (26) by one or more further drive arms (53, 63, 73) independent of the first drive arm (51, 91); and wherein the first and second rotor stages (19a, 19b) of the low pressure turbine (19) are mounted on a first drive arm (91).

9. A geared turbine engine (10) according to claim 8 wherein the third and subsequent rotor stages (19c, 19d) of the low pressure turbine (19) are mounted on a second drive arm (92).

10. A geared turbine engine (10) according to any one of the preceding claims wherein the low pressure shaft (26) is carried by a single bearing (54, 64; wherein the single bearing (54) is positioned axially adjacent the rearward of the rotor stages of the low pressure turbine (19).

11. A geared turbine engine (10) according to claim 10 wherein the single bearing (64) is positioned axially adjacent the second rotor stage of the low pressure turbine (19).

12. A geared turbine engine (10) according to any one of claims 1 to 9 wherein the low pressure shaft (26) is carried by two bearings (54, 64) comprising an upstream bearing (64) and a downstream bearing (54)..

13. A geared turbine engine (10) according to claim 12 wherein the upstream bearing (64) is axially adjacent the second low pressure turbine rotor stage (19b); and wherein the downstream bearing (56) is axially adjacent the third low pressure turbine rotor stage (19c).

14. A geared turbine engine (10) according to any one of the preceding claims wherein the high pressure turbine is configured to have an exit flow angle in the range from 20 to 50 degrees, or from 30-40 degrees.

15. A geared turbine engine (10) according to any one of the preceding claims wherein the gearbox is coupled to drive a propulsion fan ((23) and the engine is adapted to produce a maximum net thrust as herein defined of at least any of the following: 160kN, 170kN, 180kN, 190kN, 200kN, 250kN, 300kN, 350kN, 400kN, 450kN, 500kN, or 550kN.
